# EUROPÄISCHE PATENTSCHRIFT

(11) **EP 1 230 046 B1**
(45) Veröffentlichungstag und Bekanntmachung des Hinweises auf die Patenterteilung: **23.07.2003**
(21) Anmeldenummer: 00962433.9
(22) Anmeldetag: 02.09.2000
(51) Int. Cl.: B21C 23/00

(54) **VERFAHREN UND VORRICHTUNG ZUR HERSTELLUNG EINES SINTERMETALL-ROHLINGS MIT INNENLIEGENDEN, WENDELFÖRMIGEN AUSNEHMUNGEN**
METHOD AND DEVICE FOR PRODUCING A SINTERED METAL BLANK WITH INTERIOR HELICAL RECESSES
PROCEDE ET DISPOSITIF DE FABRICATION D'UNE EBAUCHE EN METAL FRITTE DOTEE D'EVIDEMENTS INTERNES HELICOIDAUX

(30) Priorität: 09.09.1999 DE 19942966; 17.08.2000 DE 10040309
(43) Veröffentlichungstag der Anmeldung: 14.08.2002
(73) Patentinhaber: Friedrichs, Arno, 95336 Mainleus (DE)
(72) Erfinder: Friedrichs, Arno, 95336 Mainleus (DE)
(74) Vertreter: Eichstädt, Alfred, Dipl.-Ing.
(86) Internationale Anmeldenummer: EP0008603
(87) Internationale Veröffentlichungsnummer: WO01017705

(56) Entgegenhaltungen:
- EP-A- 0 173 675
- EP-A- 0 465 946
- EP-A- 0 852 169

## Beschreibung

Die Erfindung bezieht sich auf ein Verfahren und eine Vorrichtung zur Herstellung eines aus plastischer Masse bestehenden, im wesentlichen kreiszylindrischen Körpers, insbesondere eines Sintermetall-Rohlings, der mindestens eine im Inneren des Körpers verlaufende, wendelförmige Innenausnehmung hat, gemäß dem Oberbegriff des Patentanspruchs 1 bzw. des Patentanspruchs 12. Weiterhin betrifft die Erfindung einen mit dem erfindungsgemäßen Verfahren hergestellten Sinterstab.

Solche Körper werden insbesondere bei der Herstellung von Bohrwerkzeugen bzw. Bohrwerkzeug-Einsätzen aus Hartmetall oder keramischen Werkstoffen benötigt. Durch den wendelförmigen Verlauf der zumindest einen Innenausnehmung, die beim fertigen Bohrwerkzeug zur Zufuhr von Kühl- oder Schmiermittel in den Schneidenbereich dient, kann das Bohrwerkzeug mit wendelförmigen Spannuten ausgestattet werden, was oftmals zur Bereitstellung günstiger Schnittund Zerspanungseigenschaften von Vorteil und deshalb angestrebt ist.

Man hat bereits frühzeitig versucht, solche Sintermetalloder Keramikrohlinge im Extrusionsverfahren herzustellen, indem die aus Sintermetallpulver bzw. Keramikpulver und Bindemittel bestehende Masse durch eine Preßdüse gedrückt wird, die einen dem anzustrebenden Rohlingsquerschnitt entsprechenden Querschnitt und zumindest einen innenliegenden Kern in Form eines Stifts hat, der beim Extrudieren der plastifizierten Masse für die Bildung der sich durch den gesamten Rohling erstreckenden Innenausnehmung dient.

Die aus der Preßdüse austretende Masse ist in der Regel sehr druckempfindlich, d. h. der austretende Rohling verformt sich bei äußerer Krafteinwirkung äußerst leicht. Da solche Verformungen nicht mehr reversibel sind und damit zu zumindest abschnittsweise unbrauchbaren Rohlingen führen, hat man versucht, das Extrusionsverfahren so weiter zu entwickeln, daß der Rohling bereits beim Austreten aus der Strangpreßdüse wendelförmig verlaufende Kühlkanäle aufweist. Gemäß einem Vorschlag (siehe z.B. EP-A-0 465 946) wird dies dadurch erzielt, daß am Innenumfang der Strangpreßdüse wendelförmig verlaufende Führungsleisten angebracht werden, die der austretenden, plastischen Masse eine Drallbewegung aufzwingen. Im Querschnitt der Preßdüse sind flexible Fäden mit einem dem Querschnitt der herzustellenden Innenausnehmung entsprechenden Querschnitt befestigt, wobei die Fäden sich bis zum Austritt des Düsenmundstückes erstrecken. Durch die Flexibilität der Fäden können diese der Drallbewegung bzw. der Drallströmung der plastischen Masse folgen und somit den zumindest einen innenliegenden Kühlkanal im Rohling erzeugen.

Gemäß einem weiteren Vorschlag wird das Düsenmundstück und/oder eine propellerartig gestaltete Nabe, an der die vorstehend genannten flexiblen bzw. biegeschlaffen Fäden befestigt sind, während des Extrusionsvorgangs in Drehbewegung versetzt, wodurch wiederum ein außenseitig glatter Rohling mit innenliegenden, wendelförmigen Kanälen bzw. Ausnehmungen hergestellt werden konnte.

Bei der Herstellung solcher Werkzeug-Rohlinge kommt es darauf an, daß der Steigungswinkel der zumindest einen wendelförmigen Innenausnehmung über die gesamte Länge des Rohlings konstant und innerhalb eng tolerierter Grenzen gehalten wird. Dies ist deshalb erforderlich, weil in den Werkzeugrohling nach dem Sinterprozeß regelmäßig Spannuten eingeschliffen werden. Dieses Einschleifen erfolgt mit weitgehend automatisierten Maschinen, so daß sich bei ungenauer Herstellung der wendelförmigen Innenausnehmungen eine unkontrolliert hohe Ausschußrate ergeben kann. Dabei ist zu berücksichtigen, daß Werkzeuge mit Vollhartmetall-Schneidteilen unter anderem deshalb eingesetzt werden, weil die hohe Beanspruchbarkeit des Werkstoffs, insbesondere die Torsionssteifigkeit, ausgenützt werden soll. Um dies sicherzustellen, darf die Innenausnehmung nicht zu nahe an die Spannut heran reichen, was bei ungenauer Herstellung der wendelförmigen Innenausnehmung jedoch nicht wirksam ausgeschlossen werden kann. Bei den vorstehend beschriebenen Ansätzen zur Herstellung der Rohlinge mit innenliegenden, wendelförmigen Ausnehmungen ist es deshalb erforderlich, das Extrusionswerkzeug und/oder die Sintereinrichtungen für die Extrusionsschnecke bzw. - falls vorhanden - für die drallerzeugenden Körper beim Extrusionsvorgang genauestens zu überwachen und auf den Massendurchsatz abzustimmen. Dies hat zur Folge, daß verhältnismäßig lange Umrüst- und Einstellzeiten am Strangpreßwerkzeug erforderlich sind, mit der Folge, daß herkömmliche Verfahren wirtschaftlich in erster Linie für große Serien Anwendung finden. Für kleine Serien bzw. für die Herstellung von Bohrwerkzeugen mit größeren Nenndurchmessern ergeben sich unverhältnismäßig hohe Maschinen-Einstellkosten, wodurch die Wirtschaftlichkeit des Herstellungsverfahrens in Frage gestellt wird.

Der Erfindung liegt deshalb de Aufgabe zugrunde, ein Verfahren und eine Vorrichtung der vorstehend genannten Art zu schaffen, mit dem bzw. mit der Rohlinge der eingangs beschriebenen Art wirtschaftlicher und nach wie vor mit hoher Präzision hergestellt werden können.

Diese Aufgabe wird hinsichtlich des Verfahrens durch die Merkmale des Patentanspruchs 1 und hinsichtlich der Vorrichtung durch die Merkmale des Patentanspruchs 12 gelöst.

Erfindungsgemäß wird der Rohling nach wie vor im Strangpreßverfahren hergestellt, das sich aufgrund hoher, möglicher Durchsatzraten durch eine große Wirtschaftlichkeit auszeichnet. Die Extrusion erfolgt so, daß die zumindest eine innenliegende Ausnehmung geradlinig extrudiert wird, was den Vorteil hat, daß sich die Produktionsparameter beim Extrudieren, d. h. die Extrusionsgeschwindigkeit, der Massendurchsatz usw. nicht mehr auf den Verlauf der innenliegenden Ausnehmungen auswirken. Stattdessen wird ein mit im wesentlichen geradlinigen Innenausnehmungen extrudierter Körper auf eine vorbestimmte Länge zugeschnitten, d. h. abgelängt und im abgelängten Zustand einem speziellen Verformungsprozeß unterzogen, der auf dem Prinzip einer den extrudierten Stab über dessen gesamte Länge erfassenden Wälzbewegung beruht. Die Anordnung ist dabei derart getroffen, daß sich die Geschwindigkeit der Wälzbewegung über die Länge des extrudierten Stabs bzw. Körpers linear und stetig ändert, wobei über den Gradienten der Wälzbewegungsgeschwindigkeitsverteilung die Steigung der wendelförmig verlaufenden Innenausnehmung bestimmt wird. Mit dem erfindungsgemäßen Verfahren wird der extrudierte Körper über seine gesamte Länge und unter Aufrechterhaltung günstiger, d. h. durchgehender Abstützungsverhältnisse gleichmäßig verdrillt, wobei sich durch die dabei stattfindende Wälzbewegung eine minimale Verformung des Rohling- Querschnitts ergibt. Dabei kommt die Konsistenz der extrudierten Strangpreßmasse dem erfindungsgemäßen Ansatz zugute. Die extrudierte Strangpreßmasse ist regelmäßig von klebriger Konsistenz, so daß über die Reibflächenanordnung eine weitgehend schlupffreie Mitnahme der Außenoberfläche des extrudierten Rohlings gewährleistet ist. Damit läßt sich die Genauigkeit des Verlaufs der zumindest einen innenliegenden wendelförmigen Ausnehmung auf einem besonders hohen Niveau halten.

In den Unteransprüchen sind vorteilhafte Ausgestaltungen des Verfahrens und der Vorrichtung zur Herstellung des im wesentlichen kreiszylindrischen Rohling-Körpers mit wendelförmiger Innenausnehmung beschrieben.

Es hat sich gezeigt, daß es bereits mit einer Abstützung des Rohlings entlang einer Linie gelingt, den zumindest einen wendelförmigen Kühlkanal ohne unzulässig große Verformungen des Rohling- Querschnitts herzustellen. Eine besonders einfache Vorrichtung zur Durchführung dieser verfahrensmäßigen Weiterbildung ist Gegenstand der Ansprüche 13 und 14. Eine solche Vorrichtung benötigt lediglich eine Auflagefläche und eine dazu parallel um eine Achse senkrecht zur Auflage schwenkbar gelagerte Fläche. Über die Absolutgröße des Relativ-Verschwenkwinkels zwischen Auflage und Reibflächenanordnung läßt sich die Steigung der zumindest einen wendelförmigen Innenausnehmung bestimmen. Diese Steigung ist zur Größe des Schwenkwinkels direkt proportional.

Mit der Weiterbildung des Verfahrens und der Vorrichtung gemäß den Ansprüchen 4 bzw. 15 läßt sich die Verformung des extrudierten Rohlings beim Verdrillen in noch engeren Grenzen halten. Die Unterstützung des extrudierten Rohlings beim Verdrillen erfolgt vorzugsweise mit einem Umschlingungswinkel von im wesentlichen 180°, wobei in diesem Fall die schwerkraftbedingten äußeren Kräfte minimal gehalten werden können. Mit der Weiterbildung der Vorrichtung gemäß Patentanspruch 17 ergibt sich ein besonders einfacher Aufbau der Vorrichtung mit einem Minimum an Komponenten und dabei gleichzeitig eine besonders schonende Abstützung des verformungsempfindlichen, extrudierten Rohlings. Diese Vorrichtung eignet sich deshalb in besonderem Maße für Strangpreßmassen mit einem hohen Plastifiziermittel-Anteil.

Da sich der Rohling beim Verdrallen tendentiell verkürzt, ist es von Vorteil, wenn sich die vom Folien- oder Textilmaterial gebildete Fläche aus einer Vielzahl von axial entlang der Achse des Körpers aneinander gereihten Teilflächen zusammensetzt, zwischen denen jeweils ein Spalt vorgesehen ist. Das Folien- oder Textilmaterial kann damit die Verkürzung des Rohlingsstabes ohne übermäßige Krafteinwirkung auf den Rohling mitmachen, was der Herstellungsgenauigkeit des zumindest einen innenliegenden Kühlkanals weiter zugute kommt.

Wenn die Antriebsrichtung gemäß Anspruch 21 an den Seitenrändern des Folien- oder Textilmaterials angreift, so entsteht ein verhältnismäßig großer Spielraum für die Gestaltung der Antriebseinrichtung. Durch geeignete Wahl der Länge des Folien- oder Textilmaterials bzw. eines entsprechenden Tuchs kann die Antriebseinrichtung in einen beliebigen Bereich oberhalb der Tuchbiegung, d. h. oberhalb des umzuformenden Rohlings, gelegt werden. Dem Konstrukteur verbleiben somit viele Möglichkeiten der Unterbringung einer Antriebseinrichtung.

Es hat sich gezeigt, daß bei Verwendung eines an den Seitenrändern zusammenhängenden Tuchs vier an den Ecken angreifende Hub- bzw. Senkantriebe genügen, um den extrudierten Rohling über die gesamte Länge gleichmäßig zu verdrillen. Vorzugsweise werden als Antriebsaggregate Schrittmotoren verwendet, die vorzugsweise programmgesteuert sind. Damit läßt sich die Verformung auf einfache Weise einstellen und beispielsweise an unterschiedliche Nenndurchmesser des herzustellenden Bohrwerkzeugs anpassen, wobei ein Minimum an Umrüstaufwand erforderlich ist.

Weitere vorteilhafte Ausgestaltungen sind Gegenstand der übrigen Unteransprüche.

Nachstehend werden anhand schematischer Zeichnungen mehrere Ausführungsbeispiele der Erfindung näher erläutert.
Es zeigen:
- FIG 1: eine Draufsicht einer ersten Ausführungsform der Vorrichtung zur Herstellung eines aus einer plastischen Masse bestehenden Sintermetall-Rohlings mit einer innenliegenden wendelförmigen Ausnehmung;
- FIG 2: die Ansicht entsprechend II in FIG 1;
- FIG 3: in einer der FIG 1 entsprechenden Ansicht die Vorrichtung nach der Verdrillung des extrudierten Rohlings;
- FIG 4A: eine schematische Ansicht einer weiteren Vorrichtung zur Herstellung eines mit mindestens einer innenliegenden, wendelförmigen Ausnehmung versehenen Sintermetallrohlings in einer Vorbereitungsphase;
- FIG 4B: die Vorrichtung gemäß FIG 4A in einer zweiten Vorbereitungsstufe;
- FIG 5: eine perspektivische Ansicht der Vorrichtung gemäß FIG 4A bzw. 4B vor dem Verdrillvorgang des Rohlings;
- FIG 6: eine der FIG 5 entsprechende Ansicht der Vorrichtung nach dem Verdrillvorgang;
- FIG 7: in einer der FIG 5 ähnlichen Ansicht eine dritte Ausführungsform der Vorrichtung zur Herstellung eines aus plastischer Masse bestehenden, im wesentlichen kreiszylindrischen Sintermetall-Rohlings mit einer im Inneren des Körpers verlaufenden, wendelförmigen Innenausnehmung;
- FIG 8: die Darstellung eines modifizierten Querschnitts des Sintermetall-Rohlings;
- FIG 9: schematisch eine Extrusion von pastösem Sintermaterial,
- FIG 10: eine Frontansicht des extrudierten pastösen Sintermaterials,
- FIG 11: eine Drallvorrichtung von der Seite,
- FIG 12: die Drallvorrichtung von Figur 11 von oben,
- FIG 13: einen Teilverfahrensablauf des Herstellungsverfahrens,
- FIG 14: einen Sinterstab von der Seite,
- FIG 15: den Sinterstab von Figur 14 im Querschnitt und
- FIG 16: den Sinterstab von Figur 15 von vorne.

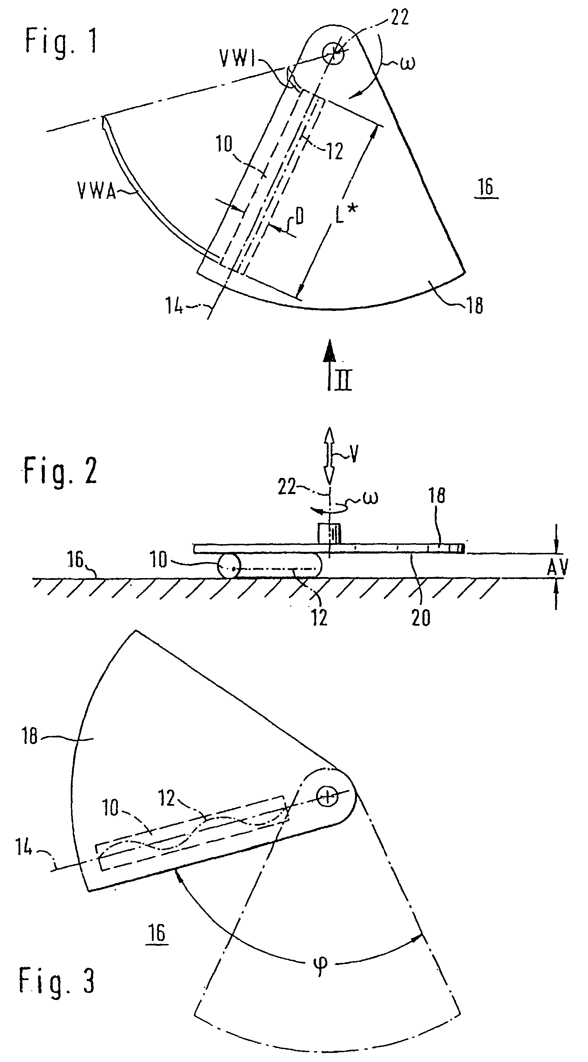

In den Figuren 1 bis 3 ist mit dem Bezugszeichen 10 ein für eine vorbestimmte Länge L* zugeschnittener, d. h. abgelängter Sintermetall-Rohling bezeichnet, der beispielsweise aus einem Hartmetallpulver mit eingeknetetem Binde- bzw. Klebemittel besteht. Dieser Sintermetall-Rohling ist beispielsweise im Strangpreßverfahren hergestellt, und zwar derart, daß er eine geradlinige und durchgehende, in den Figuren mit strichpunktierter Linie dargestellte Innenausnehmung 12 hat, die sich parallel zur Mittenachse 14 des kreiszylinderförmigen Rohlings 10 erstreckt.

Die Herstellung des Sintermetall-Rohlings erfolgt vorzugsweise im Extrusionsverfahren unter Zuhilfenahme einer Strangpreßdüse mit geeignetem Kern. Der Rohling 10 hat eine verhältnismäßig weiche Konsistenz, so daß die Handhabung, wie z. B. der Transport, sehr vorsichtig erfolgen muß, um irreversible Verformungen zu verhindern. Deshalb wird der Rohling vorzugsweise unmittelbar nach dem Austritt aus der Strangpreßdüse auf einem Luftkissen geführt und auf die in den Figuren gezeigte Unterlage 16 geleitet, die in den Figuren 1 und 3 mit der Darstellungsebene zusammenfällt. Der Rohling ist bedingt durch die Konsistenz der Strangpreßmasse auf seiner Außenseite klebrig, so daß sich eine gute Haftung mit der Auflagefläche 16 ergibt.

Um den Rohling 10 derart umzuformen, daß die geradlinige Innenausnehmung gemäß Figur 1 bzw. 2 in eine wendelförmige Ausnehmung umgeformt wird, ist folgende Anordnung getroffen:

Parallel zur ebenen Auflagefläche 16 im Vertikalabstand AV ist eine Kreissegmentscheibe 18 mit einer bodenseitigen Reibungsfläche 20 angeordnet. Die Kreissegmentscheibe 18 ist um eine Achse 22 drehbar, die auf der Oberfläche der Auflage 16 bzw. auf der Reibungsfläche senkrecht steht. Der Vertikalabstand AV zwischen den Flächen 16 und 20 ist vorzugsweise einstellbar, was durch den Doppelpfeil V in Figur 2 angedeutet ist. Dieser Vertikalabstand AV entspricht dem Durchmesser D des Rohlings 10.

Wie in Figur 1 gezeigt, wird der Rohling 10 so auf die Auflage 16 gelegt, daß seine Längsachse 14 die Drehachse 22 der Kreissegmentscheibe 18 schneidet. Anschließend wird die Kreissegmentscheibe kontrolliert abgesenkt, so daß sie den Rohling 10 entlang einer Linie tangiert, die diametral zur bodenseitigen Kontaktlinie des Rohlings 10 mit der Auflage 16 versetzt ist. Diese Ausrichtung ist in den Figuren 1 und 2 gezeigt.

Nun wird die Kreissegmentscheibe 18 mit einer Winkelgeschwindigkeit ω verschwenkt. Durch den Reibkontakt zwischen der Oberfläche 20 der Kreissegmentscheibe 18 und dem Rohling 10 wird der Rohling mitgenommen, indem er auf der Fläche der Auflage 16 mit einer Geschwindigkeit abwälzt, die sich entlang der Achse des Rohlings 10 linear und stetig ändert. Die Wälzgeschwindigkeit am inneren Ende des Rohlings 10 ist mit VWI und die Wälzgeschwindigkeit am äußeren Ende des Rohlings 10 ist mit VWA bezeichnet. Wenn somit die Segmentscheibe 18 einen bestimmten Verschwenkwinkel ϕ durchläuft, ergibt sich entlang des stabförmigen Rohlings 10 eine lineare Verteilung der Wälzstrecke, mit der Folge, daß der kreiszylindrische Rohling 10 während der Wälzbewegung verdrillt wird, und zwar derart, daß sich ein Steigungswinkel der Verdrillung und damit ein Steigungswinkel der wendelförmigen Innenausnehmung 12 ergibt, der direkt proportional zum Verschwenkwinkel ϕ ist.

Vorzugsweise wird die Kreissegmentsscheibe 18 mit möglichst geringer Auflagekraft in Kontakt mit dem stabförmigen Rohling 10 gehalten, und zwar während des gesamten Verdrillvorgangs, d. h. während der gesamten Verschwenkung um den Verschwenkwinkel ϕ (s. Fig. 3). Hier kann es von Vorteil sein, mit Drucksensoren zu arbeiten, die auf die nicht näher dargestellte Hub- und Senkeinrichtung für die Kreissegmentscheibe 18 einwirken.

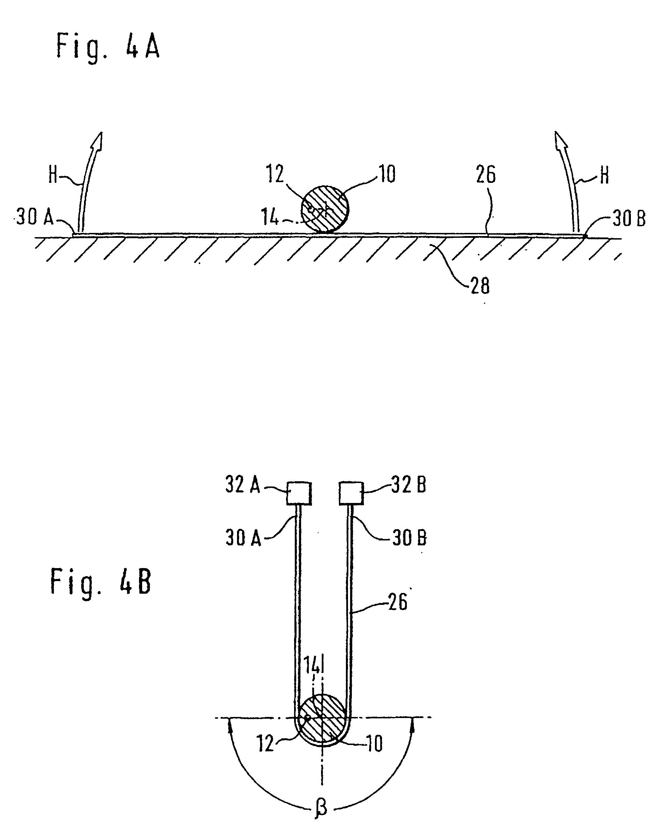

Aus der vorstehenden Beschreibung wird deutlich, daß bei der ersten Ausführungsform eine lineare Abstützung des Sintermetall-Rohlings 10 während des Verdrillvorgangs vorliegt. Nachfolgend wird eine Ausführungsform beschrieben, bei der die Abstützung während des Verdrillens flächig erfolgt. Hierzu wird auf die Figuren 4-6 Bezug genommen.

Die Verdrillvorrichtung gemäß der zweiten Ausführungsform besteht im wesentlichen aus einem biegeschlaffen oder flexiblen Folien- oder Textilmaterial 26, das zunächst flach auf eine Unterlage 28 gelegt wird. Auf das Folienoder Textilmaterial 26 wird anschließend der beispielsweise extrudierte plastische Rohling 10 gelegt, der wiederum mit einer geradlinigen Innenausnehmung 12 ausgestattet ist. Nun werden - wie in der Figur 4A durch die Pfeile H angedeutet - die Seitenränder 30A und 30B nach oben geschlagen, so daß der Zustand gemäß Figur 4B eingenommen wird. Hierbei umschlingt das Folien- oder Textilmaterial 26, das in der einfachsten Ausgestaltung als Tuch ausgebildet sein kann, den Rohling 10 über einen Umschlingungswinkel β von etwa 180°. Der Rohling 10 hängt somit im Tuch 26, das die Form eines "U" einnimmt.

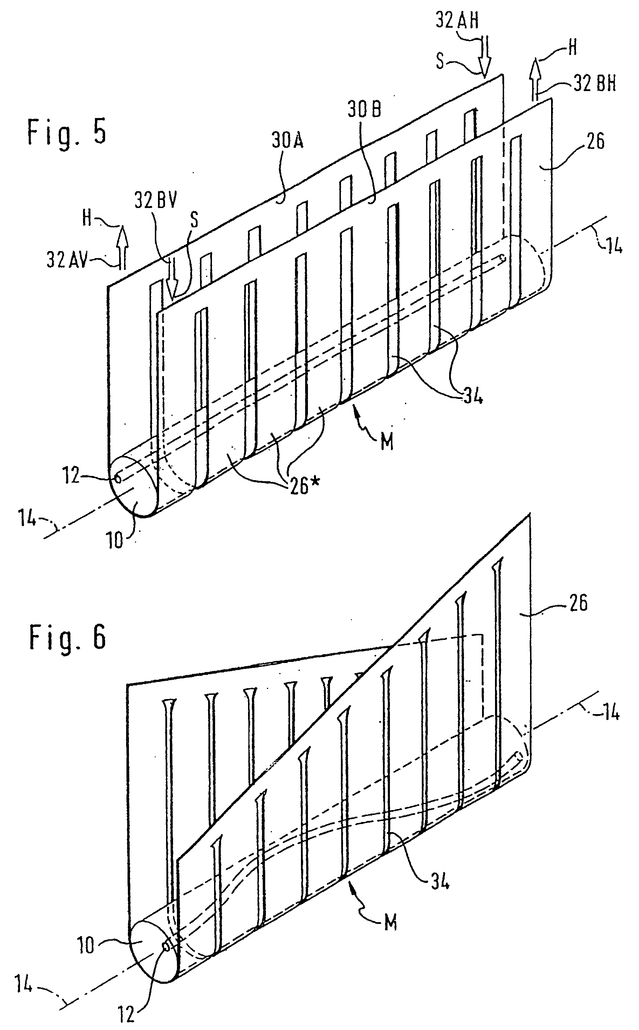

An den Enden 30A und 30B des Tuchs 26 greifen Antriebseinrichtungen 32A und 32B an, die nachfolgend unter Bezug auf die Figuren 5 und 6 näher beschrieben werden sollen:

Auf jeder Seite des Tuchs 26 sind zwei Antriebsvorrichtungen in Form von Hub- und Senkantrieben vorgesehen, die mit 32AV und 32AH bzw. mit 32BV und 32BH bezeichnet sind. Diese Antriebsvorrichtungen befinden sich an den Ecken des Tuchs bzw. des Folien- oder Textilmaterials 26. Der Antrieb erfolgt nun derart, daß die benachbarten Ecken des Tuchs 26 gegensinnig gesenkt bzw. gehoben werden, wie dies durch die Pfeile H und S in Figur 5 angedeutet ist. Da der Rohling 10 im Tuch 26 hängt, wird er auch in diesem Fall unter Zuhilfenahme der Schwerkraft des Rohlings 10 einer Wälzbewegung unterworfen, deren Größe sich über die Länge des Rohlings 10 linear und stetig ändert. Die Anordnung wird vorzugsweise so getroffen, daß die Wälzbewegung in der Mitte M des Rohlings 10 Null ist. Die Wälzbewegung wird dadurch hervorgerufen, daß sich die vom Tuch 26 gebildete Auflage unter dem Rohling 10 so wegbewegt, daß das Verschiebungsmaß zwischen der Auflage 26 und dem Rohling 10 über die Länge des Rohlings 10 einer linearen Verteilung folgt. Mit anderen Worten ausgedrückt, ergibt sich durch die vorstehend beschriebene Antriebsbewegung des Folien- oder Textilmaterials 26 der Effekt, daß in einer Ebene senkrecht zur Längsachse 14 des Rohlings 10 betrachtet die Tangentialbewegung des Tuchs 26 bezüglich des Rohlings 10 längs dessen Achse linear verändert wird, wobei beim gezeigten Ausführungsbeispiel diese Tangentialbewegung in der Mitte M des Rohlings 10 Null ist.

Figur 6 zeigt den Zustand der Verdrillvorrichtung und des Rohlings 10 nach erfolgter Verdrillung. Das vordere linke Eck des Tuchs 26 und das hintere rechte Eck sind angehoben, während die anderen beiden Ecken abgesenkt wurden. Der in Figur 5 geradlinig dargestellte innenliegende Kanal 12 ist im Zustand gemäß Figur 6 wendelförmig verdrillt. Das Maß der Verdrillung wird bestimmt durch das Ausmaß der Hebe- bzw. Senkbewegung entsprechend den Pfeilen H und S. Vorzugsweise werden für die Hebe- und Senkantriebe an den Ecken des Folien- oder Textilmaterials 26 Schrittmotoren verwendet, die geeigneterweise programmgesteuert sind, so daß eine schnelle Anpassung an unterschiedlich einzuhaltende Parameter bei der Herstellung des Rohlings vorgenommen werden kann.

Da sich der Rohling 10 bei dem Verdrillen tendentiell verkürzt, ist das Folien- oder Textilmaterial - wie in den Figuren 5 und 6 gezeigt - so gestaltet, daß es die Verkürzung ohne große Reaktionskrafteinwirkung auf den Körper 10 mitmachen kann. Zu diesem Zweck ist im Folienoder Textilmaterial 26 eine Anzahl von axialversetzten Schlitzen 34 vorgesehen, und zwar derart, daß noch zusammenhängende Seitenränder 30A und 30B bestehen bleiben. Die Schlitze 34 ermöglichen somit - wie in Figur 6 gezeigt - eine reaktionskraftfreie Kontraktion des Folien- bzw. Textilmaterials 26, wodurch unerwünschte Verformungen des Rohlings 10 und damit Maßabweichungen wirksam ausgeschlossen werden.

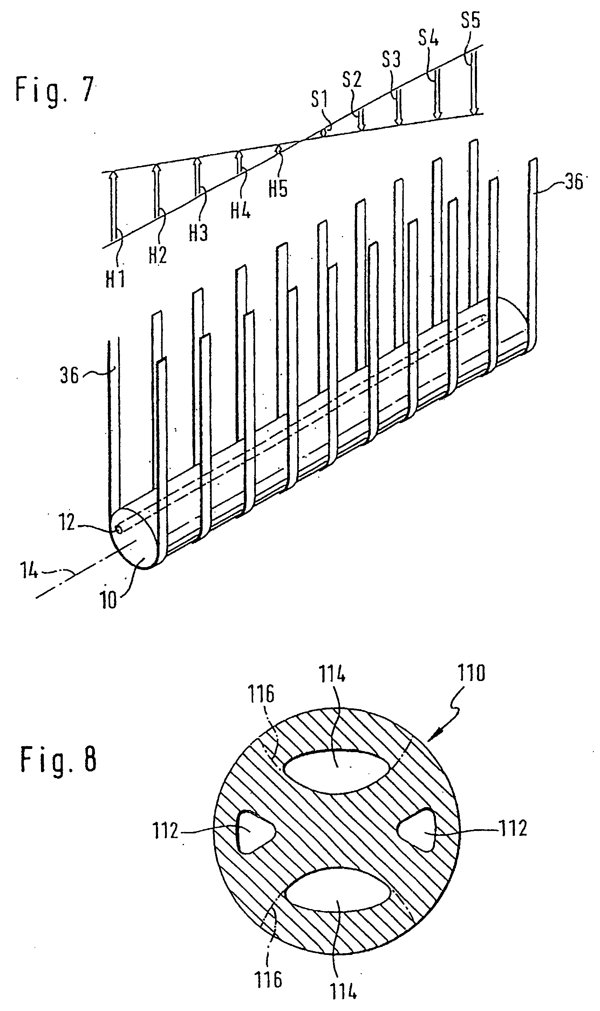

In Figur 7 ist eine Variante der Vorrichtung zur Verdrillung des mit geradlinigen Innenausnehmungen hergestellten Sintermetall-Rohlings 10 angedeutet. Abweichend von der Ausgestaltung gemäß Figur 5 und 6 wird hier eine Vielzahl von im Axialabstand zueinander stehende Bänder 36 verwendet, denen jeweils ein gesonderter Antrieb in Form eines Hub- oder Senkaggregats zugeordnet ist. Der Antrieb der Bänder 36 erfolgt ähnlich wie bei der Ausgestaltung nach Figur 5 und 6 derart, daß sich eine lineare Bewegungsverteilung längs des Rohlings 10 ergibt. Diese Bewegungsverteilung ist in Figur 7 durch die Pfeile H1 bis H5 bzw. S1 bis S5 angedeutet.

Abweichend von den zuvor beschriebenen Ausführungsbeispielen ist es selbstverständlich möglich, Modifikationen vorzunehmen, ohne den Grundgedanken der Erfindung zu verlassen. So können selbstverständlich auch andere Antriebseinrichtungen verwendet werden, solange der vorstehend beschriebene Effekt erzielt wird. Weiterhin kann bei dem in Figur 1 gezeigten Beispiel der Stab 10 auch so aufgelegt sein, dass das Stabende über den Drehmittelpunkt 22 hinausreicht, wobei dann ein kreisförmiger Teller als Teil 18 vorliegt. Auch kann der Rohling unterschiedliche Querschnittsgestaltungen aufweisen, insbesondere kann er auch eine von der Kreisform geringfügig abweichende Querschnittgestaltung haben. Während die beschriebenen Ausführungsformen Rohlinge 10 mit nur einer Innenausnehmung zeigten, ist es selbstverständlich auch möglich, mehrere Innenausnehmungen unterschiedlicher Formgebung vorzusehen. Figur 8 zeigt eine mögliche Querschnittgestaltung mit zwei Innenausnehmungen 112, die beim späteren Werkzeug die Kanäle für die Zufuhr von Kühl- oder Schmiermittel zum Schneidenbereich bilden sollen. Mit den Bezugszeichen 114 sind im Querschnitt größere Ausnehmungen bezeichnet, die so gelegt sind, daß sie in der Kontur der strichpunktierten Linien dargestellten, später einzuschleifenden Spannut 116 liegen. Bei dieser Gestaltung kann Hartmetall eingespart und das zu zerspanende Volumen beim Einschleifen der Spannuten 116 kleiner gehalten werden. Radial außerhalb der Ausnehmung 114 verbleibt noch genügend Material, um den Verformungswiderstand beim Abwälzen des Rohlings 110 so groß zu halten, daß irreversible Verformungen ausgeschlossen werden.

Das vorstehend beschriebene Verfahren und die hierzu geeignete Vorrichtung können selbstverständlich auch dann verwendet werden, wenn der Verlauf des innenliegenden Kühlkanals im extrudierten Sintermetall-Rohling lediglich korrigiert werden soll. Auch ist das Verhalten nicht auf die Bearbeitung von Rohlingen beschränkt, die aus Hartmetall oder Keramik bestehen. Es ist anwendbar auf jedes Material, das mit plastischer Konsistenz vorliegt und dementsprechend eine sehr große Verformungsempfindlichkeit hat. Schließlich ist es auch nicht erforderlich, daß der Umschlingungswinkel β 180° beträgt. Es ist auch denkbar, mit Umschlingungswinkeln zu arbeiten, die wesentlich kleiner sind. In diesem Fall ist es lediglich erforderlich, mit einer den Körper abschnittsweise umschlingenden, biegsamen Fläche zu arbeiten, die enstsprechend angetrieben ist.

Die Erfindung schafft somit ein Verfahren und eine Vorrichtung zur Herstellung eines aus plastischer Masse bestehenden, im wesentlichen kreiszylindrischen Körpers, insbesondere eines Sintermetall-Rohlings, der mindestens eine im Inneren des Körpers verlaufende, wendelförmige Innenausnehmung hat. Zur Vermeidung von übermäßigem Umrüstaufwand beim Wechsel einer Herstellungsserie wird der mit plastischer Konsistenz vorliegende Körper zunächst mit einem im wesentlichen geradlinigen Verlauf der Innenausnehmung hergestellt, vorzugsweise extrudiert. Anschließend wird der Körper auf eine bestimmte Länge abgelängt und schließlich unter Abstützung über seine ganze Länge auf einer Auflage mittels einer Reibflächenanordnung einer Wälzbewegung unterworfen, deren Geschwindigkeit sich über die Länge des Körpers linear und stetig ändert, so daß der Körper gleichmäßig verdrillt wird.

Anhand der nachfolgenden Figuren wird ein weiteres Ausführungsbeispiel für die Erfindung beschrieben, bei welchem der Querschnitt der Innenausnehmungen bzw. Kanäle nicht kreisförmig ist.

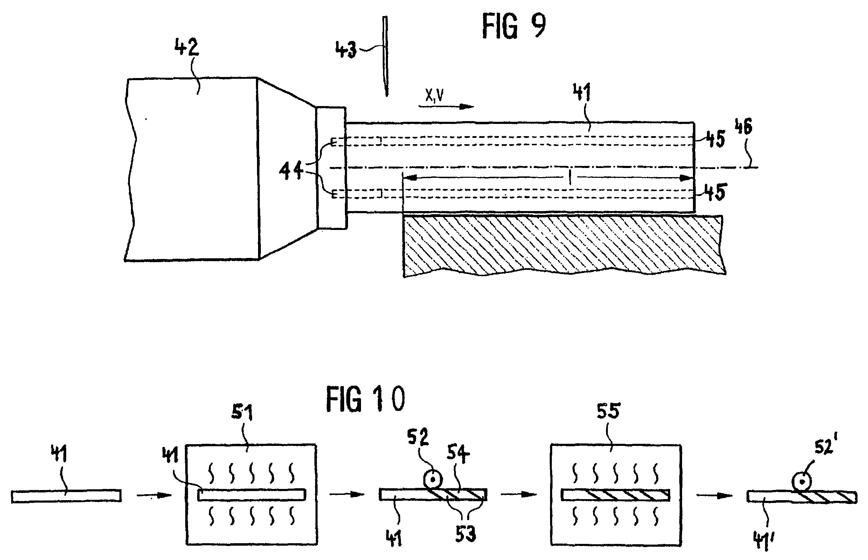

Gemäß Figur 9 wird pastöses Sintermaterial 41 durch einen nur schematisch dargstellten Extruderkopf 42 extrudiert. Das pastöse Sintermaterial 41 besteht aus einem Stahl-, Hartmetall- oder Keramikpulver, das mit einem Bindemittel versetzt ist. Die Extrusion erfolgt rein linear in einer Extrusionsrichtung x mit einer im wesentlichen konstanten Extrusionsgeschwindigkeit v. Wenn der extrudierte Strang des Sintermaterials 41 eine hinreichende Länge l erreich hat, wird er mittels einer Schneide 43 abgelängt. Das Ablängen kann dabei wahlweise manuell oder automatisch erfolgen.

Im Extrusionskopf 42 sind gestrichelt dargestellte Formkörper 44 gehalten. Gemäß Figur 9 sind dabei zwei Formkörper 44 vorhanden. Es könnten aber auch mehr oder weniger Formkörper 44 vorhanden sein. Mittels der Formkörper 44 werden während des Extrudierens in das Sintermaterial 41 Kanäle 45 eingebracht. Die Kanäle 45 verlaufen parallel, aber exzentrisch zu einer Stabachse 46. Die Stabachse 46 ist die Schwerpunktsachse des extrudierten Sintermaterials 41.

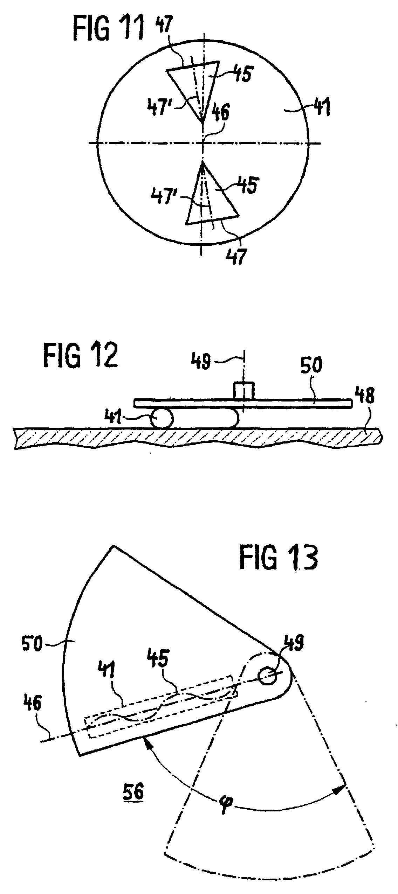

Gemäß Figur 11 weisen die Kanäle 45 Kanalquerschnitte auf, welche nicht kreisförmig sind. Sie sind - gemäß Ausführungsbeispiel - z. B. dreieckig. Ferner weisen sie Außenkanten 47 und Längsachsen 47' auf. Weder die Außenkanten 47 noch die Längsachsen 47' verlaufen konzentrisch zur Stabachse 46. Ersichtlich sind die Kanäle 45 relativ zueinander gleich ausgebildet und relativ zur Stabachse um einen Drehwinkel versetzt angeordnet. Der Drehwinkel ergibt sich dabei zu 360° dividiert durch die Zahl der Kanäle 45. Im vorliegenden Fall beträgt er also 180°.

Das Sintermaterial 41 ist auch nach dem Ablängen noch leicht plastisch verformbar. Es wird daher gemäß Figur 12 auf eine ebene Unterlage 48 gelegt, und zwar derart, daß es radial zur Drehachse 49 eines Drehtellers 50 angeordnet ist. Der Drehteller 50 wird dann - siehe auch Figur 13 - auf das abgelängte Sintermaterial 41 abgesenkt und um einen Schwenkwinkel ϕ verschwenkt. Dadurch wird das extrutierte Sintermaterial 41 über die Stablänge 1 mit einem konstanten Drall verdrallt.

Das verdrallte Sintermaterial 41 wird dann - siehe Figur 10 - in einen Trockenofen 51 eingeführt und dort getrocknet. Danach werden in das getrocknete Sintermaterial 41 mittels einer Schleifscheibe 52 Spankammern 53 eingebracht. Im Stabquerschnitt gesehen entstehen dadurch zwischen den Spankammern 53 Stabfelder 54. Das so vorbearbeitete Sintermaterial 41 wird dann einem Sinterofen 55 zugeführt, in dem es zu einem Sinterstab 41' gesintert wird.

Hinter dem Sinterofen 55 ist eine weitere Schleifscheibe 52' angeordnet. Mittels dieser Schleifscheibe 52' erfolgt eine Nachbearbeitung der Spankammern 53. Alternativ ist es auch möglich, daß erst mittels der Schleifscheibe 52' die Spankammern 53 in den dann bereits gesinterten Sinterstab 41' eingebracht werden. Das Einbringen der Spankammern 53 vor dem Sintern mittels der Schleifscheibe 52 ist aber vorzuziehen, da zu diesem Zeitpunkt das Sintermaterial 41 noch relativ leicht bearbeitbar ist.

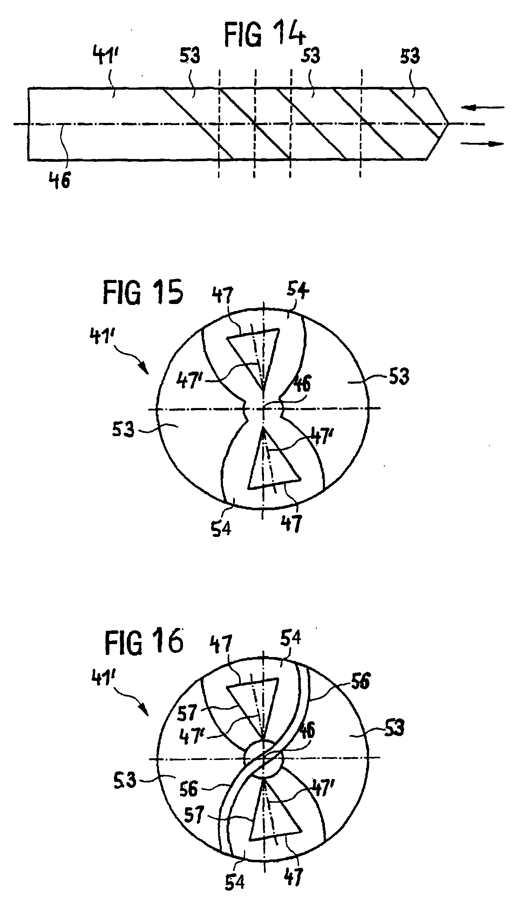

Figur 14 zeigt nun den Sinterstab 41' nach seiner Weiterbearbeitung zu einem Bohrerrohling von der Seite. Ersichtlich weist er zwei Spankammern 53 auf, die helixartig um die Stabachse 46 umlaufen.

Figur 15 zeigt nun einen Querschnitt entlang einer der gestrichelten Linien in Figur 14. Der Querschnitt ist stets der gleiche. Ersichtlich wurden daher die Spankammern 53 derart in das getrocknete Sintermaterial 41 bzw. in den Sinterstab 41' eingebracht, daß die Kanäle 45 im Stabquerschnitt gesehen im wesentlichen parallel zu den Grenzen zu den Spankammern 53 verlaufen. Da ferner der Querschnitt unabhängig von der Stelle ist, an welcher er vorgenommen wurde, laufen zwangsweise auch die Kanäle 45 mit konstanter Steigung helixartig um die Stabachse 46 herum. Die Kanalquerschnitte sind gegenüber der Darstellung gemäß Figur 10 unverändert geblieben. Sie sind also weiterhin dreieckförmig, also insbesondere nicht kreisförmig. Ferner verlaufen weder ihre Außenkanten 47 noch ihre Längsachsen 47' konzentrisch zur Stabachse 46.

Ersichtlich weist der Bohrerrohling 41' zwei Spankammern 53 und zwei zwischen den Spankammern 53 angeordnete Stabfelder 54 auf. Pro Stabfeld 54 weist der Bohrerrohling 41' einen Kanal 45 auf. Die beiden Kanäle 45 sind dabei ersichtlich gleich ausgebildet.

Figur 16 zeigt nun den Bohrerrohling 41' von vorne, also aus Richtung der Pfeile gemäß Figur 14. Gemäß Figur 16 weist der Bohrerrohling 41' an seiner Spitze zwei Schneidkanten 56 auf. Ferner verlaufen die Kanäle 45 im Querschnitt gesehen im wesentlich parallel zu den Schneidkanten 56. Genauer ausgedrückt: Sie weisen Seitenkanten 57 auf, welche im wesentlichen parallel zu den Schneidkanten 56 verlaufen.

Aufgrund der erfindungsgemäßen Form der Kanäle 45 ergibt sich gegenüber dem Stand der Technik ein vergrößerter Kanalquerschnitt. Somit ist ein höherer Durchsatz eines Mediums durch die Kanäle 45 erreichbar. Ferner können die Schneidkanten 56 im Betrieb fast über ihre gesamte Länge mit dem Medium beaufschlagt werden. Kühlung, Schmierung des Bohrers und Abführung von Bohrspänen sind somit optimiert.

## Patentansprüche

1. Verfahren zur Herstellung eines aus plastischer Masse bestehenden, im wesentlichen kreiszylindrischen Körpers, insbesondere eines Sintermetall-Rohlings, der mindestens eine im Inneren des Körpers verlaufende, wendelförmige Innenausnehmung hat, **dadurch gekennzeichnet, daß** der Körper zunächst mit einem im wesentlichen geradlinigen Verlauf der Innenausnehmung hergestellt, beispielsweise extrudiert wird und der auf eine bestimmte Länge abgelängte Körper (10; 110) anschließend unter Abstützung über seine ganze Länge auf einer Auflage (16, 26, 36) mittels einer Reibflächenanordnung (18, 26, 36) einer Wälzbewegung unterworfen wird, deren Geschwindigkeit sich über die Länge des Körpers (10; 110) linear und stetig ändert, wodurch der Körper gleichmäßig verdrillt wird.

2. Verfahren nach Anspruch 1, **dadurch gekennzeichnet, daß** der Körper (10, 110) während des Verdrillens linear abgestützt wird.

3. Verfahren nach Anspruch 2, **dadurch gekennzeichnet, daß** die Reibflächenanordnung (18) am Körper (10; 110) entlang einer Linie angreift, die diamentral zur Abstützungslinie auf der Auflage (16) versetzt ist.

4. Verfahren nach Anspruch 1, **dadurch gekennzeichnet, daß** der Körper (10; 110) während des Verdrillens flächig abgestützt wird.

5. Verfahren nach Anspruch 4, **dadurch gekennzeichnet, daß** die Reibflächenanordnung mit der Auflage (26; 36) zusammenfällt und die Wälzbewegung durch die Schwerkraft des Körpers (10; 110) bewirkt wird, indem die Auflage (26; 36) unter dem Körper (10; 110) derart wegbewegt wird, daß die Verschiebung (H, S; H1 bis H5, S1 bis S5) zwischen Auflage (26; 36) und Körper (10; 110) über dessen Länge linear verläuft und in der Mitte (M) des Körpers Null ist.

6. Verfahren nach einem der vorhergehenden Ansprüche, **dadurch gekennzeichnet, daß** der Querschnitt der Innenausnehmung nicht kreisförmig ist und die Innenausnehmung eine Außenkante aufweist, die nicht konzentrisch zur Achse des kreiszylindrischen Körpers verläuft, wobei eine ggf. vorhandene Längsachse des Kanals ebenfalls nicht konzentrisch zur Achse des kreiszylindrischen Körpers verläuft.

7. Verfahren nach einem der vorhergehenden Ansprüche, **dadurch gekennzeichnet, daß** der verdrallte Körper zu einem Sinterstab gesintert wird.

8. Verfahren nach Anspruch 7, **dadurch gekennzeichnet, daß** das Sintermaterial vor dem Sintern getrocknet wird und in das getrocknete Sintermaterial mindestens eine Spankammer eingebracht wird.

9. Verfahren nach Anspruch 7, **dadurch gekennzeichnet, daß** in den Sinterstab nach dem Sintern mindestens eine Spankammer eingebracht wird.

10. Verfahren nach Anspruch 8 oder 9, **dadurch gekennzeichnet, daß** die Spankammer derart in das getrocknete Sintermaterial bzw. in den Sinterstab eingebracht wird, daß die Innenausnehmung im Querschnitt gesehen im wesentlichen parallel zur Grenze zur Spankammer verläuft.

11. Verfahren nach einem der obigen Ansprüche, **dadurch gekennzeichnet, daß** während des Extrudierens in das Sintermaterial (1) mehrere gleich ausgebildete, relativ zur Stabachse (6) um einen Drehwinkel versetzt angeordnete Innenausnehmungen eingebracht werden.

12. Vorrichtung zur Durchführung des Verfahrens nach einem der vorhergehenden Ansprüche, **gekennzeichnet durch** eine Auflage (16; 26; 36) zur Unterstützung des Körpers (10; 110) über dessen gesamte Länge (L*), einer am Körper ebenfalls über dessen gesamte Länge (L*) angreifende Reibflächenanordung (18; 26; 36), und einer Antriebseinrichtung (ω, 32A, 32B), mit der die Auflage (16; 26; 36) und/oder die Reibflächenanordnung (18; 26; 36) einer Bewegung (ϕ, S, H, S1 bis S5, H1 bis H5) unterworfen wird, welche am Körper eine Wälzbewegung induziert, deren Geschwindigkeit sich über die Länge des Körpers stetig und linear ändert.

13. Vorrichtung nach Anspruch 12, **dadurch gekennzeichnet, daß** die Auflage (16) von einer ebenen Fläche gebildet ist, und die Reibflächenanordnung eine zur Auflage (16) im Parallelabstand (AV) liegende Fläche (20) aufweist, wobei die Antriebseinrichtung eine Drehantriebseinrichtung ist, mit der eine Relativ-Drehbewegung (ω) zwischen Auflage (16) und Reibflächenanordnung (18) bezüglich einer Drehachse (22) erzeugbar ist, die auf der Auflage (16) senkrecht steht und die Längsachse (14) des Körpers (10) schneidet.

14. Vorrichtung nach Anspruch 13, **dadurch gekennzeichnet, daß** die Fläche der Reibflächenanordnung von einer Kreissegmentscheibe (18) gebildet ist.

15. Vorrichtung nach Anspruch 12, **dadurch gekennzeichnet, daß** die Auflage mit der Reibflächenanordnung (26; 36) zusammenfällt und von einer den Körper (10) zumindest abschnittsweise umschlingenden, biegsamen Fläche (26; 36) gebildet ist, die sich an den Körper (10) anschmiegt und derart mit der Antriebseinrichtung (32A, 32B) gekoppelt ist, daß sich die auf einer durch die Längsachse (14) des Körpers (10) verlaufenden Ebene senkrecht stehende Tangentialbewegung (H, S; H1 bis H5, S1 bis S5) der Fläche (26; 36) über die Länge des Körpers (10) stetig und linear ändert.

16. Vorrichtung nach Anspruch 15, **dadurch gekennzeichnet, daß** die Tangentialbewegung (H, S) der Fläche (26; 36) im Bereich der Mitte (M) des Körpers (10) Null ist.

17. Vorrichtung nach Anspruch 15 oder 16, **dadurch gekennzeichnet, daß** die sich an den Körper (10) anschmiegende Fläche (26; 36) von einem Folien- oder Textilmaterial gebildet ist, das den Körper (10) über einen Winkelbereich (β) von 180° umschlingt.

18. Vorrichtung nach Anspruch 17, **dadurch gekennzeichnet, daß** der Körper (10) vom Folien- oder Textilmaterial hängend getragen ist.

19. Vorrichtung nach einem der Ansprüche 15 bis 18, **dadurch gekennzeichnet, daß** sich die Fläche (26) aus einer Vielzahl von axial entlang der Achse des Körpers (10) aneinandergereihten Teilflächen (26*) zusammensetzt, zwischen denen jeweils ein Spalt (34) liegt.

20. Vorrichtung nach Anspruch 19, **dadurch gekennzeichnet, daß** die Teilflächen (26*) miteinander über randseitige Stege (30A, 30B) verbunden sind.

21. Vorrichtung nach einem der Ansprüche 17 bis 20, **dadurch gekennzeichnet, daß** die Antriebseinrichtung (32A, 32B) an den Seitenrändern(30A, 30B) des Folien- oder Textilmaterials (26; 36) angreift.

22. Vorrichtung nach Anspruch 20 oder 21, **dadurch gekennzeichnet, daß** die Antriebseinrichtung (32AV, 32AH, 32BV, 32BH) an den Ecken des Folien- oder Textilmaterials angreift.

23. Vorrichtung nach einem der Ansprüche 17 bis 22, **dadurch gekennzeichnet, daß** die Antriebseinrichtung (32AV, 32AH, 32BV, 32BH) vorzugsweise programmgesteuerte Motoren aufweist.

## Claims

1. Method of producing a substantially circularly cylindrical body, particularly a sintered metal blank, which consists of a plastic material and which has at least one helical internal recess extending in the interior of the body, **characterised in that** the body is initially produced, for example extruded, with a substantially rectilinear course of the internal recess and the body (10; 110) cut to a defined length is subsequently subjected, whilst supported over its entire length on a support (16, 26, 36), by means of a friction surface arrangement (18, 26, 36) to a rolling motion, the speed of which changes linearly and constantly over the length of the body (10; 110) whereby the body is uniformly twisted.

2. Method according to claim 1, **characterised in that** the body (10, 110) is linearly supported during the twisting.

3. Method according to claim 2, **characterised in that** the friction surface arrangement (18) engages the body (10; 110) along a line diametrally offset relative to the line of support on the support (16).

4. Method according to claim 1, **characterised in that** the body (10; 110) is supported over an area during the twisting.

5. Method according to claim 4, **characterised in that** the friction surface arrangement is coincident with the support (26; 36) and the rolling motion is effected by the gravitational force of the body (10; 110) **in that** the support (26; 36) is moved away under the body (10; 110) in such a manner that the displacement (H, S; H1 to H5, S1 to S5) between the support (26; 36) and the body (10; 110) extends linearly over the length thereof and is zero in the centre (M) of the body.

6. Method according to any one of the preceding claims, **characterised in that** the cross-section of the internal recess is non-circular and the internal recess has an outer edge which extends non-concentrically relative to the axis of the circularly cylindrical body, wherein an optionally present longitudinal axis of the channel equally extends non-concentrically relative to the axis of the circularly cylindrical body.

7. Method according to any one of the preceding claims, **characterised in that** the twisted body is sintered to be a sintered rod.

8. Method according to claim 7, **characterised in that** the sintered material is dried before the sintering and at least one tooth space is formed into the dried sintered material.

9. Method according to claim 7, **characterised in that** at least one tooth space is formed in the sintered rod after the sintering.

10. Method according to claim 8 or 9, **characterised in that** the tooth space is formed in the dried sintered material or in the sintered rod in such a manner that the internal recess extends substantially parallel to the boundary to the tooth space as seen in cross-section.

11. Method according to any one of the preceding claims, **characterised in that** a plurality of identically formed internal recesses arranged offset relative to the rod axis (6) by a rotational angle are formed in the sintered material (1) during the extruding.

12. Device for carrying out the method according to any one of the preceding claims, **characterised by** a support (16; 26; 36) for supporting the body (10; 110) over the entire length (L*) thereof, a friction surface arrangement (18; 26; 36) engaging the body similarly over the entire length (L*) thereof and a drive device (ω, 32A, 32B) by which the support (16, 26; 36) and/or the friction surface arrangement (18; 26; 36) is or are subjected to a movement (ϕ, S, H, S1 to S5, H1 to H5) which induces at the body a rolling motion, the speed of which changes constantly and linearly over the length of the body.

13. Device according to claim 12, **characterised in that** the support (16) is formed by a planar surface and the friction surface arrangement has a surface (20) disposed at a parallel spacing (AV) from the support (16), wherein the drive device is a rotary drive device by which a relative rotational movement (ω) can be produced between the support (16) and the friction surface arrangement (18) with respect to an axis (22) of rotation which extends perpendicularly to the support (16) and intersects the longitudinal axis (14) of the body (10),.

14. Device according to claim 13, **characterised in that** the surface of the friction surface arrangement is formed by a circle-segment disc (18).

15. Device according to claim 12, **characterised in that** the support is coincident with the friction surface arrangement (26; 36) and is formed by a flexible surface (26; 36) which loops around the body (10) at least in a section and adapts to the body (10) and which is coupled with the drive device (32A, 32B) in such a manner that the tangential movement (H, S; H1 to H5, S1 to S5), which extends perpendicularly to a plane extending through the longitudinal axis (14) of the body (10), of the surface (26; 36) changes constantly and linearly over the length of the body (10).

16. Device according to claim 15, **characterised in that** the tangential movement (H, S) of the surface (26; 36) is zero in the region of the centre (M) of the body (10).

17. Device according to claim 15 or 16, **characterised in that** the surface (26; 36) adapting to the body (10) is formed by a film material or textile material which loops around the body (10) over an angular range (β) of 180°.

18. Device according to claim 17, **characterised in that** the body (10) is carried in suspended manner by the film material or textile material.

19. Device according to any one of claims 15 to 18, **characterised in that** the surface (26) is composed of a plurality of part surfaces (26*) which are disposed in a line axially along the axis of the body (10) and between each of which is disposed a respective gap (34).

20. Device according to claim 19, **characterised in that** the part surfaces (26*) are interconnected by way of webs (30A, 30B) at the edge.

21. Device according to any one of claims 17 to 20, **characterised in that** the drive device (32A, 32B) engages the side edges (30A, 30B) of the film material or textile material (26; 36).

22. Device according to claim 20 or 21, **characterised in that** the drive device (32AV, 32AH, 32BV, 32BH) engages the comers of the film material or textile material.

23. Device according to any one of claims 17 to 22, **characterised in that** the drive device (32AV, 32AH, 32BV, 32BH) preferably comprises program-controlled motors.

## Revendications

1. Procédé pour la fabrication d'un corps composé d'une masse plastique et essentiellement cylindrique circulaire, et en particulier d'une ébauche en métal céramique possédant au moins un évidemment intérieur hélicoïdal s'étendant à l'intérieur du corps, **caractérisé en ce que** le corps est dans un premier temps fabriqué par exemple par extrusion avec un cours essentiellement linéaire de l'évidemment intérieur, et **en ce que** le corps (10 ; 110) tronçonné pour une certaine longueur est ensuite soumis, par support sur toute sa longueur sur un appui (16, 26, 36), à l'aide d'une configuration de surface de friction (18, 26, 36), à un mouvement de roulement dont la vitesse se modifie de manière linéaire et continue sur la longueur du corps (10, 110), moyennant quoi le corps est torsadé de façon régulière.

2. Procédé selon la revendication 1, **caractérisé en ce que** le corps (10, 110) est supporté linéairement pendant la mise en torsade.

3. Procédé selon la revendication 2, **caractérisé en ce que** la configuration de surface de friction (18) est en prise avec le corps (10, 110) le long d'une ligne qui est décalée diamétralement par rapport à la ligne de support sur l'appui (16).

4. Procédé selon la revendication 1, **caractérisé en ce que** le corps (10, 110) est supporté en plan pendant la mise en torsade.

5. Procédé selon la revendication 4, **caractérisé en ce que** la configuration de surface de friction coïncide avec l'appui (26, 36) et **en ce que** le roulement est provoqué par la force de gravité du corps (10, 110) en bougeant plus loin l'appui (26, 36) sous le corps (10, 110) de manière à ce que le déplacement (H, S, H1 à H5, S1 à S5) entre l'appui (26, 36) et le corps (10, 110) s'étende linéairement sur sa longueur et soit nul au milieu (M) du corps.

6. Procédé selon l'une quelconque des revendications précédentes, **caractérisé en ce que** la section transversale de l'évidemment intérieur n'est pas en forme de cercle, et **en ce que** l'évidemment intérieur présente une arrête extérieure laquelle ne s'étend pas de manière concentrique par rapport à l'axe du corps cylindrique circulaire, moyennant quoi un axe longitudinal de canal éventuellement existant ne s'étend également pas de manière concentrique par rapport à l'axe du corps cylindrique circulaire.

7. Procédé selon l'une quelconque des revendications précédentes, **caractérisé en ce que** le corps torsadé est fritté pour devenir une tige en métal céramique.

8. Procédé selon la revendication 7, **caractérisé en ce que** la matière en métal céramique est séchée avant le frittage et **en ce que** au moins une chambre usinée est aménagée dans la matière en métal céramique.

9. Procédé selon la revendication 7, **caractérisé en ce qu'**au moins une chambre usinée est aménagée dans la tige en métal céramique après le frittage.

10. Procédé selon les revendications 8 ou 9, **caractérisé en ce que** la chambre usinée est aménagée dans la matière en métal céramique séchée ou dans la tige en métal céramique de manière à ce que l'évidemment intérieur, lorsque vu en coupe, s'étend essentiellement parallèlement à la limite avec la chambre usinée.

11. Procédé selon l'une quelconque des revendications précédentes, **caractérisé en ce que** pendant l'extrusion dans la matière en métal céramique (1), plusieurs évidements intérieurs de formation semblable, disposés de manière décalée par rapport à l'axe de tige (6) pour un angle de rotation, sont aménagés.

12. Dispositif pour la mise en oeuvre du procédé selon l'une quelconque des revendications précédentes, **caractérisé par** un appui (16, 26, 36) pour le soutient du corps (10, 110) sur toute sa longueur (L*), une configuration de surface de friction (18, 26, 36) en prise également sur toute la longueur (L*) du corps, et un dispositif d'entraînement (ω, 32A , 32B) à l'aide duquel l'appui (16, 26, 36) et/ou la configuration de surface de friction (18, 26, 36) sont soumis à un mouvement (ϕ, S, H, S1 à S5, H1 à H5) lequel induit sur le corps un mouvement de roulement dont la vitesse se modifie de manière continue et linéaire sur la longueur du corps.

13. Dispositif selon la revendication 12, **caractérisé en ce que** l'appui (16) est formé par une surface plane, et **en ce que** la configuration de surface de friction présente une surface (20) située à un écart parallèle (AV) par rapport à l'appui (16), moyennant quoi le dispositif d'entraînement est un dispositif d'entraînement tournant, à l'aide duquel un mouvement pivotant relatif (ω) peut être généré entre l'appui (16) et la configuration de la surface de friction (18) relativement à un axe de rotation (22), lequel se dresse à la verticale sur l'appui (16) et coupe l'axe longitudinal du corps (10).

14. Dispositif selon la revendication 13, **caractérisé en ce que** la surface de la configuration de surface de friction est formée par un disque en segment de cercle (18).

15. Dispositif selon la revendication 12, **caractérisé en ce que** l'appui coïncide avec la configuration de surface de friction (26, 36) et est formé par une surface (26, 36) flexible enlaçant le corps (10) au moins par sections, laquelle épouse le corps (10) et est couplée avec le dispositif d'entraînement (32A, 32B) de manière à ce que le mouvement tangentiel (H, S, H1, à H5, S1 à S5) de la surface (26, 36) se dressant verticalement sur un plan qui s'étend à travers l'axe longitudinal (14) du corps (10), se modifie de manière continue et linéaire sur la longueur du corps.

16. Dispositif selon la revendication 15, **caractérisé en ce que** le mouvement tangentiel (H, S) de la surface (26, 36) est nul dans la zone du milieu (M) du corps (10).

17. Dispositif selon les revendications 15 ou 16, **caractérisé en ce que** la surface (26, 36) qui épouse le corps (10) est formée avec une matière en feuille ou textile, laquelle enlace le corps (10) sur une zone d'angle (β) de 180°.

18. Dispositif selon la revendication 17, **caractérisé en ce que** le corps (10) est porté suspendu par la matière en feuille ou textile.

19. Dispositif selon l'une quelconque des revendications 15 à 18, **caractérisé en ce que** la surface (26) se compose d'une multitude de surfaces partielles (26*) jointes les unes aux autres axialement le long de l'axe du corps (10), entre lesquelles se trouve respectivement une fente (34).

20. Dispositif selon la revendication 19, **caractérisé en ce que** les surfaces partielles (26*) sont reliées ensemble via des nervures (30A, 30B) du côté du bord.

21. Dispositif selon l'une quelconque des revendications 17 à 20, **caractérisé en ce que** le dispositif d'entraînement (32A, 32B) est en prise avec les bords latéraux (30A, 30B) de la matière en feuille ou textile.

22. Dispositif selon les revendications 20 ou 21, **caractérisé en ce que** le dispositif d'entraînement (32AV, 32AH, 32BV, 32BH) est en prise avec les angles de la matière en feuille ou textile.

23. Dispositif selon l'une quelconque des revendications 17 à 22, **caractérisé en ce que** le dispositif d'entraînement (32AV, 32AH, 32BV, 32BH) présente de préférences des moteurs à cycles automatiques.
